(19) Europäisches Patentamt / European Patent Office / Office européen des brevets

(11) **EP 2 821 809 B1**

(12) **FASCICULE DE BREVET EUROPEEN**

(45) Date de publication et mention
de la délivrance du brevet:
**01.02.2017 Bulletin 2017/05**

(51) Int Cl.:
*G01S 13/22* (2006.01)   *G01S 13/53* (2006.01)
*G01S 7/292* (2006.01)   *G01S 13/10* (2006.01)
*G01S 13/30* (2006.01)

(21) Numéro de dépôt: **14173521.7**

(22) Date de dépôt: **23.06.2014**

(54) **Procédé de détection d'au moins une cible par radar doppler à impulsions avec mesure non ambiguë de la vitesse radiale et radar doppler à impulsions pour la mise en oeuvre d'un tel procédé**

Erfassungsverfahren mindestens eines Ziels mithilfe eines Dopplerradars mit unzweideutiger Messung der radialen Geschwindigkeit, und Doppler-Impuls-Radar-Gerät zur Umsetzung dieses Verfahrens

Method for detecting at least one target by pulse-Doppler radar with unambiguous measurement of radial velocity and pulse-Doppler radar for implementing such a method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2013 FR 1301596**

(43) Date de publication de la demande:
**07.01.2015 Bulletin 2015/02**

(73) Titulaire: **Thales**
**92400 Courbevoie (FR)**

(72) Inventeur: **Cottron, Rodolphe**
**78851 ELANCOURT Cedex (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
**EP-A1- 0 434 503     EP-A2- 1 369 703**
**US-A- 5 442 359     US-B1- 6 720 909**

- **MAIER M W: "Non-uniform PRI pulse-Doppler radar", SYSTEM THEORY, 1994., PROCEEDINGS OF THE 26TH SOUTHEASTERN SYMPOSIUM ON,, 7 mars 1993 (1993-03-07), pages 164-168, XP002231019, ISSN: 0094-2898**
- **PRIBIC R: "Radar irregular sampling", ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA, vol. 3, 17 mai 2004 (2004-05-17), pages 933-936, XP010718344, DOI: 10.1109/ICASSP.2004.1326699 ISBN: 978-0-7803-8484-2**

**Description**

L'invention porte sur un procédé de détection d'au moins une cible par radar Doppler à impulsions permettant une mesure non ambiguë de la vitesse radiale de la cible. L'invention porte également sur un radar Doppler à impulsions, en particulier aéroporté, permettant la mise en oeuvre de ce procédé.

L'invention peut s'appliquer notamment aux radars de veille, et plus particulièrement aux radars de surveillance aéroportés.

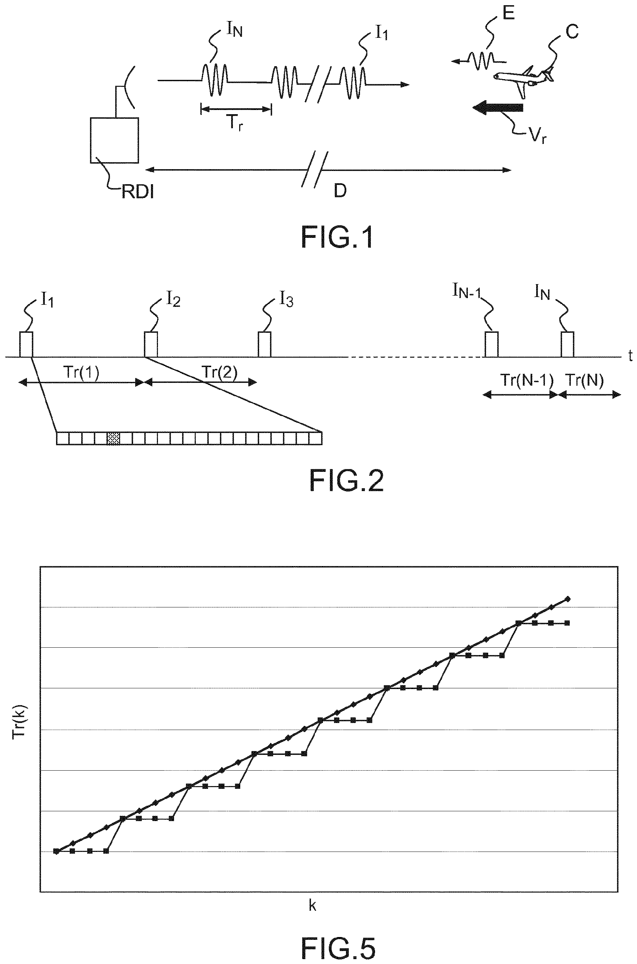

Le principe du radar Doppler à impulsions, connu de l'art antérieur, est illustré schématiquement sur la figure 1. Une station radar RDI émet une rafale d'impulsions $I_1$ - $I_N$ cohérentes, séparées d'un intervalle temporel Tr dit période de récurrence ou de répétition, et reçoit des échos E de ces impulsions générés par une cible C située à une distance D et se déplaçant avec une vitesse radiale Vr par rapport à la station radar. La mesure du retard de réception et celle du décalage Doppler des échos permettent de déterminer la distance D de la cible et sa vitesse radiale Vr, respectivement. Toutefois, ces mesures sont affectées par des ambigüités. En effet, il n'est pas possible de déterminer à quelle impulsion de la rafale correspond un écho reçu ; par conséquent le retard de réception ne peut être déterminé qu'à un multiple de la période de récurrence, et la distance ne peut être déterminée qu'à un multiple de c·Tr/2 près (c étant la vitesse de la lumière). De même, comme les échos reçus sont échantillonnées à une fréquence 1/Tr, il se produit des phénomènes de repliements de spectres qui affectent la mesure du décalage Doppler et font en sorte que la vitesse radiale ne puisse être déterminée qu'à un multiple de λ/(2·Tr) près, λ étant la longueur d'onde des impulsions radioélectrique. On parle, respectivement, de « ambigüité de position » et de « ambigüité de vitesse ».

On remarque que la période de récurrence affecte les ambigüités de position et de vitesse dans des sens opposés ; si on choisit Tr grand, on s'affranchit de l'ambigüité de position mais on aggrave l'ambigüité de vitesse (le cas limite étant constitué par un radar émettant une seule impulsion, ce qui correspond à Tr→∞ : il n'y a aucune ambigüité de position mais il est impossible de déterminer la vitesse radiale), et inversement (le cas limite étant constitué par un signal continu, ce qui correspond à Tr→0 : il n'y a aucune ambigüité de vitesse mais il est impossible de déterminer la position).

En pratique, on distingue trois cas principaux.

Dans les systèmes dit « à basse fréquence de répétition » ou « basse fréquence de récurrence » (BFR) Tr est suffisamment grand pour que soit vérifié l'inégalité suivante : c·Tr/2>$D_{max}$, où $D_{max}$ est la distance maximale instrumentée du radar, c'est-à-dire la distance maximale à laquelle on cherche à détecter des cibles. Ces systèmes ne sont pas ambigus en distance et un traitement opportun des signaux reçus est appliqué pour résoudre l'ambigüité de vitesse radiale, voir par exemple le document EP 0 818 691. Ce traitement est très complexe et difficilement compatible avec des systèmes embarqués. Une autre possibilité consiste à résoudre l'ambigüité de vitesse à partir des mesures non ambigües de position, en utilisant un filtre de Kalman. Un inconvénient de cette solution est que la mesure de vitesse n'est pas instantanée, et le temps de convergence de l'algorithme peut être long.

Les systèmes à « moyenne fréquence de répétition » (ou « moyenne fréquence de récurrence » MFR) sont ambigus tant en vitesse qu'en distance. La résolution des ambigüités est possible grâce à des techniques décrites par exemple dans l'ouvrage de P. Lacomme, J.P. Hardange, J.C. Marchais et E. Normant « Air and Spaceborne Radar Systems, An Introduction » William Andrew Publishing (2001), voir en particulier la section 8.6.5. Ces techniques nécessitent l'utilisation, en réception, d'un oscillateur pilote à haute pureté spectrale, qui est couteux.

Les systèmes à « haute fréquence de répétition » ou « haute fréquence de récurrence » (HFR), présentent une ambigüité en distance qui ne peut généralement pas être résolue, et ne permettent qu'une mesure non ambigüe de la vitesse radiale.

Le document US 6,720,909 décrit un procédé de détection de cible par radar Doppler à impulsions selon le préambule de la revendication 1.

L'invention vise à surmonter les inconvénients précités de l'art antérieur et à procurer un procédé de détection de cibles par radar Doppler à impulsions sans ambigüité de vitesse et ne présentant pas les inconvénients précités de l'art antérieur. Le procédé de l'invention s'applique de manière préférentielle aux systèmes BFR.

Ainsi, un objet de l'invention est un procédé de détection d'au moins une cible par radar Doppler à impulsions comportant les étapes suivantes :

a) générer une rafale d'impulsions radioélectriques cohérentes ;
b) recevoir des signaux susceptibles de contenir des échos desdites impulsions provenant de ladite ou d'au moins une dite cible, les démoduler et les échantillonner ; et
c) les filtrer au moyen d'une pluralité de filtres, chaque dit filtre étant un filtre adapté à ladite rafale d'impulsions avec un décalage de fréquence différent ; dans lequel :

- les impulsions radioélectriques de ladite rafale sont séparées d'un intervalle temporel variable d'une impulsion à l'autre ; caractérisé en ce que

- au moins certains desdits filtres appartiennent à une même classe d'ambiguïté, une classe d'ambiguïté étant constituée par des filtres dont lesdits décalages de fréquence sont espacés entre eux de multiples entiers d'une fréquence moyenne de récurrence des impulsions de ladite rafale ; et en ce que
- le procédé comprend également une étape d) de résolution d'ambiguïté de vitesse radiale par détermination, parmi les signaux de sortie des filtres d'une même classe d'ambiguïté, du signal de magnitude la plus élevée.

Selon différentes caractéristiques avantageuses d'un tel procédé, prises séparément ou en combinaison :

- Les impulsions radioélectriques de ladite rafale peuvent être séparées d'un intervalle temporel variable de manière monotone d'une impulsion à l'autre.
- En variante, ladite rafale peut comprendre une succession de sous-rafales, les intervalles temporels séparant lesdites impulsions radioélectriques étant constants à l'intérieur de chaque sous-rafale mais variables d'une sous-rafale à l'autre.
- Avantageusement, lesdits intervalles temporels peuvent être variables linéairement d'une impulsion à l'autre ou d'une sous-rafale à l'autre.
- Ladite étape b) peut comprendre une opération de sélection d'échantillons desdits signaux séparés par des intervalles temporels coïncidents avec ceux qui séparent les impulsions de ladite rafale.
- Ladite opération de sélection d'échantillons desdits signaux peut être répétée une pluralité de fois en correspondance de différentes hypothèses de distance d'une cible.
- Chaque dit filtre peut être configuré pour fournir un signal de sortie S(f) donné par

$$S(f) = \sum_{k=0}^{N-1} s[t(k)] \times w[t(k)] \times exp[-2\pi j \times f \times t(k)]$$

où N est le nombre d'impulsions dans ladite rafale ; $s[t(k)]$ un signal d'entrée dudit filtre obtenu par ladite opération de sélection d'échantillons, de telle sorte que, pour chaque valeur de k, l'intervalle $t(k)-t(k-1)$ soit égal à l'intervalle temporel entre la $(k-1)^{ème}$ et la $k^{ème}$ impulsion de la rafale, l'instant $t(0)$ dépendant de l'hypothèse de distance considérée ; $w[t(k)]$ est une fonction de pondération échantillonnée aux instants $t(k)$ ; et f le décalage de fréquence propre audit filtre, correspondant au décalage Doppler pour une hypothèse de vitesse radiale d'une cible $Vr=f\cdot\lambda/2$, $\lambda$ étant la longueur d'onde desdites impulsions radioélectriques.
- Le procédé peut comprendre également une étape de seuillage des signaux de sortie desdits filtres pour déterminer ceux qui sont susceptibles de correspondre à des échos réfléchis par une cible.
- Dans un procédé selon un mode de réalisation préféré :

  - ladite étape c) est mise en oeuvre en filtrant les signaux démodulés et échantillonnées au moyen d'une pluralité de bancs de filtres, correspondant chacun à une classe d'ambiguïté distincte ;
  - ladite étape de seuillage comprend le calcul de la puissance des signaux de sortie desdits filtres et leur comparaison à un seuil prédéfini ; et
  - ladite étape d), mise en oeuvre après ladite étape de seuillage, comprend, pour chaque banc de filtres dont une pluralité de signaux de sortie présentent une puissance dépassant ledit seuil prédéfini, la sélection du signal de sortie présentant la puissance la plus élevée.

- Le plus petit intervalle temporel entre deux impulsions de ladite rafale peut être supérieur ou égal à $2D_{max}/c$ où $D_{max}$ est la distance maximale instrumentée du radar et c la vitesse de propagation desdites impulsions radioélectriques, moyennant quoi le radar est non ambigu en distance.

Un autre objet de l'invention est un radar Doppler à impulsions pour la mise en oeuvre d'un tel procédé, comprenant :

- un circuit de génération d'une rafale d'impulsions radioélectriques cohérentes ;
- un circuit de réception, pour démoduler et échantillonner des signaux pouvant contenir des échos desdites impulsions et pour sélectionner les échantillons correspondant à une hypothèse de distance d'une cible; et
- un processeur de signaux pour filtrer lesdits signaux au moyen d'une pluralité de filtres, chaque dit filtre étant un filtre adapté à ladite rafale d'impulsions avec un décalage de fréquence différent ;
- ledit circuit de génération est configuré ou programmé pour générer des impulsions radioélectriques séparées d'un intervalle temporel variable d'une impulsion à l'autre ; caractérisé en ce que:

- au moins certains desdits filtres appartiennent à une même classe d'ambiguïté, une classe d'ambiguïté étant constituée par des filtres dont lesdits décalages de fréquence sont espacés entre eux de multiples entiers d'une fréquence moyenne de récurrence des impulsions de ladite rafale ; et en ce que
- ledit processeur de signaux est programmé ou configuré pour déterminer, parmi les signaux de sortie des filtres d'une même classe d'ambigüité, le signal de magnitude la plus élevée.

D'autres caractéristiques, détails et avantages de l'invention ressortiront à la lecture de la description faite en référence aux dessins annexés donnés à titre d'exemple et qui représentent, respectivement :

- la figure 2, une rafale d'impulsions radioélectriques cohérentes séparées d'un intervalle temporel variable d'une impulsion à l'autre, conformément à l'invention ;
- la figure 3A, la fonction d'ambiguïté associée à une rafale présentant une période de récurrence constante, conformément à l'art antérieur ;
- la figure 3B, la fonction d'ambiguïté associée à la rafale de la figure 2 ;
- la figure 4, un diagramme fonctionnel illustrant les opérations de filtrage des échos, détection des cibles et résolution des ambiguïtés de vitesse d'un procédé selon l'invention ;
- la figure 5, une rafale d'impulsions radioélectriques cohérentes selon un mode de réalisation alternatif de l'invention ; et
- la figure 6, un radar Doppler à impulsions selon un mode de réalisation de l'invention.

Comme illustré sur la figure 2, un procédé selon la présente invention se différencie d'une technique de radar Doppler à impulsions conventionnel par le fait que la station radio émet une rafale de N>1 impulsions radioélectriques $I_1$ - $I_N$ qui sont séparées d'un intervalle temporel Tr variable d'une impulsion à l'autre ; ainsi on note Tr(k), pour k allant de 1 à N-1, l'intervalle entre le début de la k-ème impulsion de la rafale et le début de la (k+1)-ème impulsion de la même rafale, tandis que Tr(N) est 7 l'intervalle entre la N-ème et dernière impulsion d'une rafale et la première impulsion de la rafale suivante. On définit $Tr_{min}$ et $Tr_{max}$ comme étant, respectivement, le plus petit et le plus grand intervalle temporel entre deux impulsions d'une rafale selon l'invention - dans le cas de la figure 2, $Tr_{min}$=Tr(N) et $Tr_{max}$=Tr(1) - $Fr_{min}$=1/$Tr_{max}$, la «fréquence de répétition» ou « fréquence de récurrence » minimale des impulsions de la rafale, $Fr_{max}$=1/$Tr_{min}$ la fréquence de récurrence maximale, $Fr_{moy}$=($Fr_{min}$+$Fr_{max}$)/2 la fréquence de récurrence moyenne et $\Delta Fr$= $Fr_{max}$-$Fr_{min}$ la variation de fréquence de récurrence au cours de la rafale.

D'une manière conventionnelle, l'intervalle entre deux impulsions successives est découpé par échantillonnage à une fréquence $F_{ech}$ en NCD>1 « cases distance », associées chacune à une valeur non-ambigüe du retard de réception d'un écho et donc d'une distance de cible ; la largeur de chaque case distance est c/(2$F_{ech}$). Comme les intervalles Tr(k) ne sont pas constants, c'est le plus court - ici, Tr(N) - qui détermine la distance ambigüe et donc le nombre de cases distance significatives.

Dans la suite on considèrera, à titre d'exemple non limitatif, le cas d'un intervalle entre impulsions diminuant linéairement : Tr(k)=$Tr_{ref}$-k·dTr.

Les échos reçus par la station radar sont démodulés et échantillonnés à la fréquence $F_{ech}$. Dans la suite, on s'intéressera à une seule case distance ; cela signifie que l'on effectue un sous-échantillonnage en sélectionnant, dans chaque intervalle de répétition, le n[ème] échantillon, correspondant à la n[ème] case distance (avec n≤NCD). En d'autres termes, pour chaque case distance on retient les échantillons du signal reçu correspondant aux instants :

$$t(k) = \sum_{i=2}^{k} Tr(k-1) \qquad\qquad (1)$$

où l'origine des temps - c'est-à-dire l'instant t(0) dépend de la case distance considérée. Plus précisément, pour la n[ème] case distance on prend t(0) retardé d'un temps n·c/(2$F_{ech}$) par rapport à l'instant de début d'émission de la première impulsion de la rafale.

Dans le cas linéaire, on a t(k)= $Tr_{ref}$-dTr·k(k-1)/2.

Pour une cible se déplaçant à une vitesse radiale $V_r$ par rapport à la station radar (signe positif pour une cible à l'approche), le signal démodulé vaut s(t)=exp(j2π·$f_0$·t), où « j » est l'unité imaginaire et $f_0$=2·Vr/λ le décalage Doppler, λ étant la longueur d'onde de la porteuse des impulsions. Après sous-échantillonnage, on a :

$$s(k)=s[t(k)]= \exp[j2\pi \cdot f_0 \cdot t(k)]. \qquad\qquad (2)$$

Dans le cas linéaire on a, plus particulièrement : s(k)=s[t(k)]= exp{j2π·$f_0$·[$Tr_{ref}$-dTr·k(k-1)/2]}.

Comme dans le cas d'un traitement conventionnel, le signal s(k) est filtré au moyen d'un banc de filtres, chaque filtre étant le filtre adapté pour la rafale d'impulsions pour une « hypothèse de vitesse » (et donc un décalage Doppler) différent. Le signal de sortie du filtre adapté correspondent à une hypothèse de fréquence Doppler « f », S(f), est donné par :

$$S(f) = \sum_{k=0}^{N-1} s(k) \times exp[-2\pi j \times f \times t(k)] \qquad (3)$$

Il est facile de se rendre compte que, si t(k)=k·Tr, ce qui constitue le cas conventionnel de la figure 1, l'équation (3) se réduit à une transformée de Fourier discrète :

$$S(f) = \sum_{k=0}^{N-1} s(k) \times exp[-2\pi j \times f \times k \times Tr] \qquad (4)$$

Pour cette raison on appelle le signal de sortie $S(f)$ exprimé en fonction de la fréquence Doppler f le « pseudo-spectre » du signal reçu s(t).

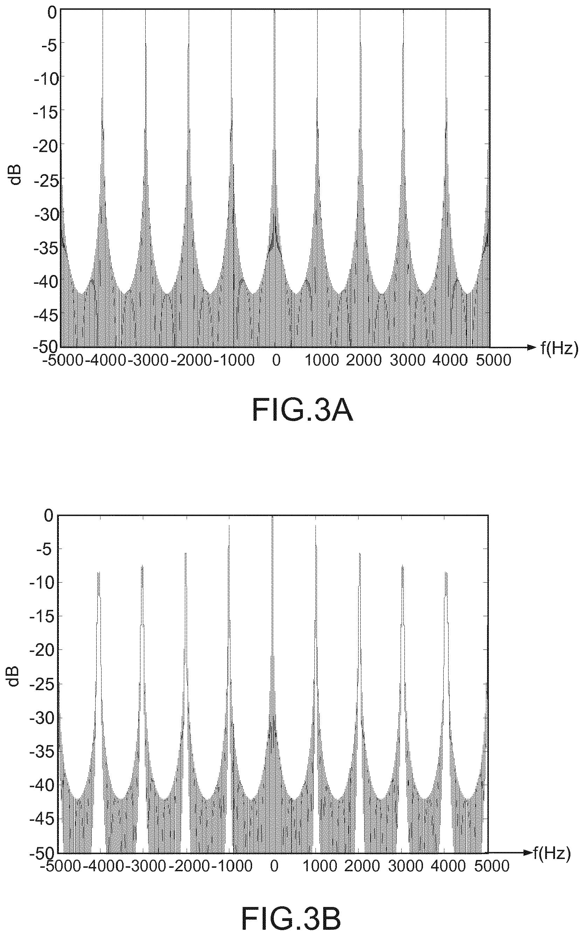

La figure 3A illustre la fonction d'ambiguïté associée à une rafale dont la période de récurrence est constante (Tr=1 ms) ; il s'agit du cas conventionnel, correspondant à l'équation (4) ci-dessus. On se limite à une case distance déterminée, par conséquent la fonction d'ambiguïté est exprimée comme fonction de la fréquence uniquement. On peut remarquer que cette fonction d'ambiguïté présente des pics (« raies ambiguës ») de même intensité espacées de Fr=1/Tr=1000 Hz. Cela signifie que, si les échos reçus présentent un décalage Doppler $f_0$ (inconnu a priori), en appliquant l'équation (4) on obtient $S(f_0) = S(f_0 \pm m \cdot Fr)$ pour tout m entier ; par conséquent, le décalage Doppler ne peut être mesuré qu'avec une incertitude égale à Fr. Il s'agit du phénomène précité d'ambiguïté de vitesse.

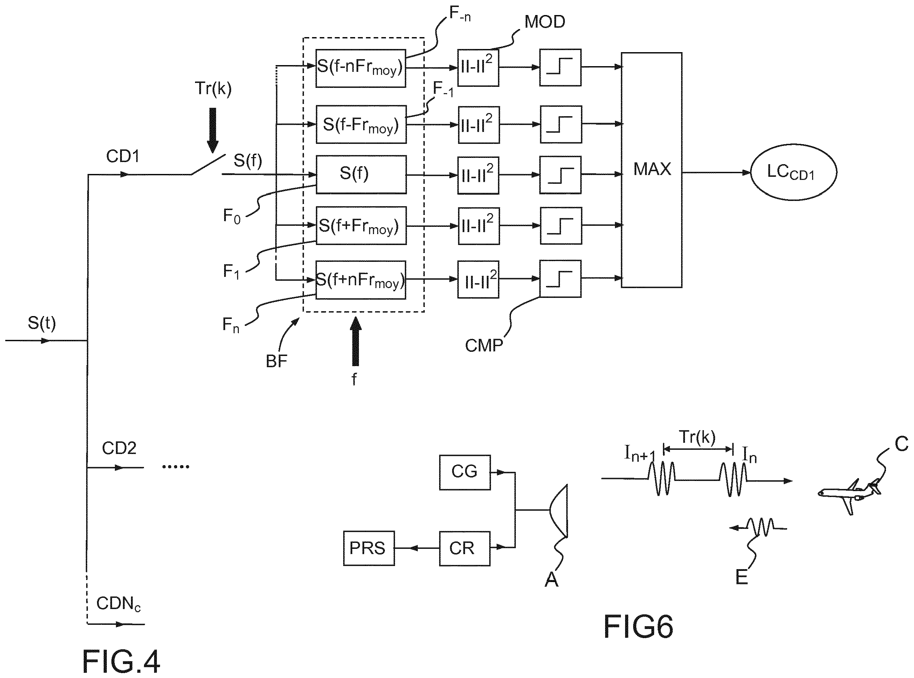

La figure 3B illustre la fonction d'ambiguïté associée au cas où $Fr_{min}$=1000 Hz et $Fr_{max}$=1020 Hz. Là aussi on remarque des «raies ambiguës », dont l'espacement est égal à $Fr_{moy}$=1010 Hz, mais l'intensité de ces raies diminue avec le rang d'ambiguïté. Cela exprime le fait que, si les échos reçus présentent un décalage Doppler $f_0$ (inconnu a priori), en appliquant l'équation (3) on obtient $\|S(f_0)\|^2 > \|S(f_0 \pm mFr_{moy})\|^2$ pour tout m entier différent de zéro. Cette propriété de la fonction d'ambiguïté permet la levée de l'ambiguïté de vitesse, par un traitement des signaux qui sera décrit en détail plus loin, à l'aide de la figure 4.

Les propriétés suivantes de la fonction d'ambiguïté sont utiles au dimensionnement d'un système radar Doppler à impulsions selon l'invention :

- L'intensité relative des raies « ambiguës » dépend de ∆Fr*N (nombre d'impulsions dans une rafale) ; ainsi, par exemple, du point de vue de l'intensité des raies il est équivalent de choisir ($Fr_{min}$=1000 Hz, $Fr_{max}$=1040 Hz ; N=64 impulsions/rafale) ou bien ($Fr_{min}$=1000 Hz, $Fr_{max}$=1020 Hz ; N=128 impulsions/rafale).
- Pour N constant, l'intensité relative des raies dépend du rapport $Fr_{max}/Fr_{min}$. ; ainsi, par exemple, du point de vue de l'intensité relative des raies il est équivalent de choisir ($Fr_{min}$=1000 Hz, $Fr_{max}$=1020 Hz ; N=128 impulsions/rafale) ou bien ($Fr_{min}$=2000 Hz, $Fr_{max}$=2040 Hz ; N=128 impulsions/rafale).
- La largeur des raies est approximativement proportionnelle à l'ordre d'ambiguïté et vaut environ m∆Fr, où m est l'ordre d'ambiguïté.

D'une manière générale, plus la différence ∆Fr et le rapport $Fr_{max}/Fr_{min}$ sont élevés, plus l'écart d'intensité entre la raie « principale » et les raies ambiguës « secondaires » est important - ce qui est souhaitable - mais plus ces raies sont larges - ce qui ne l'est pas. Ces critères conduisent, pour chaque application considérée, à la détermination de valeurs optimales pour $Fr_{min}$ et $Fr_{max}$. Quant à la valeur du paramètre N, elle est déterminée principalement en fonction de la résolution de vitesse que l'on souhaite obtenir.

Conformément à un mode de réalisation de l'invention les échos reçus sont traités de la manière suivante.

Premièrement, ils sont démodulés et échantillonnés. Ensuite, on procède à la sélection des échantillons correspondant à chaque case distance, conformément aux équations (1) et (2). On obtient ainsi un signal à temps discret pour chaque case distance.

Le signal échantillonné correspondant à chaque case distance est filtré au moyen d'une pluralité de bancs de filtres adaptés selon l'équation (3), dont les fréquences f sont espacées de $Fr_{moy}$. En d'autres termes, les filtres d'un même banc sont associés à des fréquences ambiguës (ou plus exactement des fréquences qui, dans le cas d'un traitement conventionnel, seraient ambiguës). Les modules carrés (puissances) des sorties des filtres sont comparés à un seuil : si au moins une sortie dépasse ce seuil, on peut considérer qu'une cible a été détectée. En général, à ce stade, il y a encore une ambiguïté résiduelle, car il est possible que les sorties de plusieurs filtres dépassent le seuil. Cette ambiguïté peut cependant être levée en prenant la sortie de puissance maximale.

Ces opération sont répétées pour d'autres bancs de filtres, de manière à échantillonner un domaine de fréquences (et donc de vitesses radiales) d'intérêt.

Ce traitement est illustré schématiquement sur la figure 4

En entrée, le signal s(t) a déjà été démodulé et échantillonné à la fréquence $F_{ech}$. Il est traité simultanément (mais un traitement successif est également possible) sur Nc voies, correspondant chacune à une case distance CD1, CD2, ..., CDNc. On considère seulement la première voie, CD1. Sur cette voie, le signal est sous-échantillonné à des instants t(k) espacés d'intervalles Tr(k), comme cela a été expliqué plus haut. Le signal s(k) ainsi obtenu, représentatif de la seule première case distance, est fourni en entrée à un banc BF de filtre, de préférence numériques (dans ce cas, évidemment, les signaux s(k) doivent être convertis au format numérique ; cette opération n'est pas représentée afin de ne pas surcharger la figure 4). Un de ces filtres, $F_0$, est le filtre adapté pour une fréquence f choisie dans la plage « non-ambigüe » (0, $Fr_{moy}$) ou (-$Fr_{moy}$/2, $Fr_{moy}$/2) ; son signal de sortie est S(f), donné par l'équation (3) ci-dessus. Les autres filtres $F_{-n}$ ... $F_{-1}$ ... $F_1$ ... $F_n$ correspondent aux fréquences ambigües de rang -m à +m ; leurs signaux de sortie, également donnés par l'équation (3), sont $S(f + Fr_{moy})$ ... $S(f + mFr_{moy})$ ... $S(f - Fr_{moy})$ ... $S(f - mFr_{moy})$. En d'autres termes, les filtres du banc BF sont associés à une même « classe d'ambiguïté » et permettent d'échantillonner, avec un pas égal à $Fr_{moy}$, une plage spectrale d'intérêt sensiblement plus large que la plage « non-ambigüe » (0, $Fr_{moy}$) ou (-$Fr_{moy}$/2, $Fr_{moy}$/2).

Des blocs MOD calculent le module carré des sorties des filtres, c'est-à-dire leur puissance, qui est ensuite comparée à un seuil prédéfini par des blocs comparateurs CMP. On considère que seuls les signaux de puissance supérieure au seuil correspondent à des échos réfléchis par des cibles.

Dans le cas d'un traitement conventionnel, avec Tr(k) constant, la forme de la fonction d'ambiguïté (figure 3A) implique que tous les filtres d'un même banc présentent des sorties de même puissance. Cela n'est plus vrai lorsque Tr(k) est variable (voir la figure 3B). Il est possible qu'un seul filtre présente une sortie qui dépasse le seuil, auquel cas il n'y a aucune ambiguïté de vitesse radiale. Il est également possible que plusieurs filtres présentent une sortie au-dessus du seuil, auquel cas on considère que la sortie de puissance maximale (bloc MAX) correspond au vrai décalage Doppler ; l'ambiguïté de vitesse radiale est donc levée. La cible ainsi détectée est alors ajoutée à la liste $LC_{CD1}$ des cibles situées dans la case distance CD1. Les autres voies fournissent des listes semblables. Bien entendu, il est également possible qu'aucun signal de sortie ne dépasse le seuil ; cela signifie qu'il n'y a aucune cible dans la case distance CD1 présentant un vitesse radiale telle que son décalage Doppler vaut $S(f + i * Fr_{moy})$ avec i entier compris entre -$mFr_{moy}$ et +$mFr_{moy}$.

Ces opérations sont ensuite répétées pour d'autres valeurs de l'hypothèse de fréquence f échantillonnant la plage « non-ambigüe » (0, $Fr_{moy}$) ou (-$Fr_{moy}$/2, $Fr_{moy}$/2).

La figure 6 illustre un diagramme fonctionnel d'un système radar Doppler à impulsions selon un mode de réalisation de l'invention. Un tel système comprend un circuit CG de génération d'un train d'impulsions avec un intervalle inter-impulsion variable comme décrit plus haut, une antenne A d'émission de ce train d'impulsion et de détection des échos E réfléchis par une cible C, un circuit de réception CR de ces échos et un processeur de signaux PRS mettant en oeuvre le traitement décrit plus haut en référence à la figure 4.

Un filtre selon l'équation (3) présente des lobes secondaires relativement intenses, à -13 dB. Par conséquent, comme on le fait dans le cas du traitement conventionnel basé sur l'équation (4), il est avantageux d'introduire une pondération. L'équation du filtre devient alors :

$$S(f) = \sum_{k=0}^{N-1} s(k) \times w[t(k)] \times exp[-2\pi j \times f \times t(k)] \qquad (5)$$

où w[t(k)] est une fonction de pondération échantillonnée aux instants t(k). A titre d'exemple il peut s'agir d'une fonction de pondération de Hamming : $w(t) = 0,54 - 0,46 cos\left(2\pi \frac{t}{T}\right)$, où T est la durée totale de la rafale d'impulsions.

On remarque que l'équation (3) peut être considérée comme un cas particulier de (5), avec la fonction de pondération w[t(k)] identiquement égale à 1.

L'invention a été décrite par rapport à un cas particulier, dans lequel l'intervalle entre impulsions d'une rafale varie linéairement. Cela n'est pas essentiel : d'autres lois de variation peuvent être utilisées avec des bons résultats ; il est cependant préférable que cette variation soit monotone. La génération de N intervalles inter-impulsions différents peut s'avérer complexe dans le cas de rafales comportant un nombre élevé (quelques dizaines ou plus) d'impulsions. Dans ce cas, il est possible de simplifier la mise en oeuvre de l'invention en décomposant la rafale en NR sous-rafales plus courtes, avec un intervalle inter-impulsions constant à l'intérieur d'une même sous-rafale et variable, par exemple linéairement, d'une sous-rafale à l'autre. Par exemple la figure 5 illustre un cas où une rafale de 32 impulsions avec un intervalle inter-impulsions augmentant linéairement est remplacée par une rafale constituée de 8 sous-rafales de 4 impulsions chacune. Le nombre d'intervalles différents est ainsi réduit d'un facteur 4. Cette réduction peut aussi être plus importante ; par exemple, il a été vérifié que en décomposant une rafale de 128 impulsions décomposée en 10 sous-rafales de 12 ou 13 impulsions on réduit le nombre d'intervalles à générer de 128 à 10 sans aucune dégradation perceptible des performances.

L'invention, en outre, a été décrite par rapport à un exemple particulier de traitement des signaux reçus, illustrés par la figure 4. Des variantes sont toutefois envisageables. Par exemple, on peut imaginer de filtrer les signaux échantillonnés au moyen d'un banc de filtres comprenant un filtre pour chaque fréquence d'un domaine d'intérêt (et non seulement pour un ensemble de raies ambiguës), d'effectuer le seuillage, identifier a posteriori les sous-ensembles de signaux correspondant à des fréquences ambigües et enfin de résoudre l'ambigüité par recherche du signal le plus intense dans chaque sous-ensemble.

**Revendications**

1. Procédé de détection d'au moins une cible par radar Doppler à impulsions comportant les étapes suivantes :

> a) générer une rafale d'impulsions radioélectriques cohérentes ($I_1 ... I_N$) ;
> b) recevoir des signaux susceptibles de contenir des échos (E) desdites impulsions provenant de ladite ou d'au moins une dite cible (C), les démoduler et les échantillonner ; et
> c) les filtrer au moyen d'une pluralité de filtres ($F_{-n} ... F_0 ... F_n$) chaque dit filtre étant un filtre adapté à ladite rafale d'impulsions avec un décalage de fréquence différent ;

> dans lequel :

> - les impulsions radioélectriques de ladite rafale sont séparées d'un intervalle temporel ($Tr(k)$) variable d'une impulsion à l'autre ;

> **caractérisé en ce que** :

> - au moins certains desdits filtres appartiennent à une même classe d'ambigüité, une classe d'ambigüité étant constituée par des filtres dont lesdits décalages de fréquence sont espacés entre eux de multiples entiers d'une fréquence moyenne de récurrence des impulsions de ladite rafale ; et **en ce que**
> - le procédé comprend également une étape d) de résolution d'ambigüité de vitesse radiale par détermination, parmi les signaux de sortie des filtres d'une même classe d'ambigüité, du signal de magnitude la plus élevée.

2. Procédé selon la revendication 1 dans lequel les impulsions radioélectriques de ladite rafale sont séparées d'un intervalle temporel variable de manière monotone d'une impulsion à l'autre.

3. Procédé selon l'une des revendications précédentes dans lequel ladite rafale comprend une succession de sous-rafales, les intervalles temporels séparant lesdites impulsions radioélectriques étant constants à l'intérieur de chaque sous-rafale mais variables d'une sous-rafale à l'autre.

4. Procédé selon l'une des revendications précédentes dans lequel lesdits intervalles temporels sont variables linéairement d'une impulsion à l'autre ou d'une sous-rafale à l'autre.

5. Procédé selon l'une des revendications précédentes dans lequel ladite étape b) comprend une opération de sélection d'échantillons desdits signaux séparés par des intervalles temporels coïncidents avec ceux qui séparent les impulsions de ladite rafale.

6. Procédé selon la revendication 5 dans lequel ladite opération de sélection d'échantillons desdits signaux est répétée une pluralité de fois en correspondance de différentes hypothèses de distance d'une cible.

7. Procédé selon la revendication 6 dans lequel chaque dit filtre est configuré pour fournir un signal de sortie S(f) donné par

$$S(f) = \sum_{k=0}^{N-1} s[t(k)] \times w[t(k)] \times exp[-2\pi j \times f \times t(k)]$$

où N est le nombre d'impulsions dans ladite rafale ; $s[t(k)]$ un signal d'entrée dudit filtre obtenu par ladite opération de sélection d'échantillons, de telle sorte que, pour chaque valeur de k, l'intervalle $t(k)-t(k-1)$ soit égal à l'intervalle temporel entre la $(k-1)^{ème}$ et la $k^{ème}$ impulsion de la rafale, l'instant $t(0)$ dépendant de l'hypothèse de distance considérée ; $w[t(k)]$ est une fonction de pondération échantillonnée aux instants $t(k)$ ; et f le décalage de fréquence propre audit filtre, correspondant au décalage Doppler pour une hypothèse de vitesse radiale d'une cible $Vr=f\cdot\lambda/2$, $\lambda$ étant la longueur d'onde desdites impulsions radioélectriques.

8. Procédé selon l'une des revendications précédentes comprenant également une étape de seuillage des signaux de sortie desdits filtres pour déterminer ceux qui sont susceptibles de correspondre à des échos réfléchis par une cible.

9. Procédé selon les revendications 7 et 8 dans lequel :

- ladite étape c) est mise en oeuvre en filtrant les signaux démodulés et échantillonnées au moyen d'une pluralité de bancs de filtres (BF), correspondant chacun à une classe d'ambigüité distincte ;
- ladite étape de seuillage comprend le calcul de la puissance des signaux de sortie desdits filtres et leur comparaison à un seuil prédéfini ; et
- ladite étape d), mise en oeuvre après ladite étape de seuillage, comprend, pour chaque banc de filtres dont une pluralité de signaux de sortie présentent une puissance dépassant ledit seuil prédéfini, la sélection du signal de sortie présentant la puissance la plus élevée.

10. Procédé selon l'une des revendications précédentes dans lequel le plus petit intervalle temporel entre deux impulsions de ladite rafale est supérieur ou égal à $2D_{max}/c$ où $D_{max}$ est une distance maximale instrumentée du radar et c la vitesse de propagation desdites impulsions radioélectriques, moyennant quoi le radar est non ambigu en distance.

11. Radar Doppler à impulsions pour la mise en oeuvre d'un procédé selon l'une des revendications précédentes comprenant :

- un circuit (CG) de génération d'une rafale d'impulsions radioélectriques cohérentes ;
- un circuit (CR) de réception, pour démoduler et échantillonner des signaux pouvant contenir des échos desdites impulsions, et pour sélectionner les échantillons correspondant à une hypothèse de distance d'une cible; et
- un processeur de signaux (PRS) pour filtrer lesdits signaux au moyen d'une pluralité de filtres, chaque dit filtre étant un filtre adapté à ladite rafale d'impulsions avec un décalage de fréquence différent ;
- ledit circuit de génération étant configuré ou programmé pour générer des impulsions radioélectriques séparées d'un intervalle temporel variable d'une impulsion à l'autre ;

**caractérisé en ce que** :

- au moins certains desdits filtres appartiennent à une même classe d'ambigüité, une classe d'ambigüité étant constituée par des filtres dont lesdits décalages de fréquence sont espacés entre eux de multiples entiers d'une fréquence moyenne de récurrence des impulsions de ladite rafale ; et **en ce que**
- ledit processeur de signaux est programmé ou configuré pour déterminer, parmi les signaux de sortie des filtres d'une même classe d'ambigüité, le signal de magnitude la plus élevée.

**Patentansprüche**

1. Verfahren zum Erkennen von wenigstens einem Ziel mittels Puls-Doppler-Radar, das die folgenden Schritte beinhaltet:

a) Erzeugen eines Burst von kohärenten radioelektrischen Impulsen ($I_1 ...I_N$);
b) Empfangen, Demodulieren und Abtasten von Signalen, die wahrscheinlich Echos (E) der Impulse enthalten, die von dem einen oder wenigstens einem Ziel (C) kommen; und

c) Filtern der Signale mit mehreren Filtern (F$_{-n}$ ...F$_0$ ...F$_n$), wobei jedes Filter ein Filter ist, das an den Impuls-Burst mit einer anderen Frequenzverschiebung angepasst ist;

wobei:

- die radioelektrischen Impulse des Burst durch ein Zeitintervall (Tr(k)) getrennt sind, das von einem Impuls zum andern variabel ist;

**dadurch gekennzeichnet, dass**:

- wenigstens bestimmte der Filter zur selben Ambiguitätsklasse gehören, wobei eine Ambiguitätsklasse aus Filtern zusammengesetzt ist, deren Frequenzverschiebungen um ganzzahlige Vielfache einer mittleren Wiederholfrequenz der Impulse des Burst voneinander beabstandet sind; und dadurch, dass
- das Verfahren ferner einen Schritt d) des Auflösens von radialer Geschwindigkeitsambiguität durch Bestimmen des größten Signals aus den von den Filtern derselben Ambiguitätskategorie ausgegebenen Signalen beinhaltet.

2. Verfahren nach Anspruch 1, wobei die radioelektrischen Impulse des Burst durch ein Zeitintervall voneinander getrennt sind, das von einem Impuls zum andern monoton variabel ist.

3. Verfahren nach einem der vorherigen Ansprüche, wobei der Burst eine Folge von Subbursts umfasst, wobei die die radioelektrischen Impulse trennenden Zeitintervalle innerhalb jedes Subburst konstant, aber von einem Subburst zum andern variabel sind.

4. Verfahren nach einem der vorherigen Ansprüche, wobei die Zeitintervalle von einem Impuls zum andern oder von einem Subburst zum andern linear variabel sind.

5. Verfahren nach einem der vorherigen Ansprüche, wobei Schritt b) einen Vorgang des Auswählens von Samples der durch Zeitintervalle getrennten Signale beinhaltet, die mit denen zusammenfallen, die die Impulse des Burst trennen.

6. Verfahren nach Anspruch 5, wobei der Vorgang des Auswählens von Samples der Signale mit einer Häufigkeit gemäß verschiedenen Distanzhypothesen eines Ziels wiederholt wird.

7. Verfahren nach Anspruch 6, wobei jedes Filter zum Liefern eines Ausgangssignals S(f) konfiguriert ist, bereitgestellt durch:

$$S(f) = \sum_{k=0}^{N-1} s[t(k)] \times w[t(k)] \times exp[-2\pi j \times f \times t(k)]$$

,

wobei N die Anzahl von Impulsen in dem Bündel ist, s[t(k)] ein Eingangssignal des Filters ist, erhalten mit dem Vorgang des Auswählens von Samples, so dass für jeden Wert von k das Intervall t(k)-t(k-1) gleich dem Zeitintervall zwischen dem (k-1)$^{ten}$ und dem k$^{ten}$ Impuls des Burst ist, wobei der Zeitpunkt t(0) von der betrachteten Distanzhypothese abhängig ist; w[t(k)] eine zu den Zeitpunkten t(k) abgetastete Gewichtungsfunktion ist; und f die für das Filter spezifische Frequenzverschiebung ist, entsprechend der Doppler-Verschiebung für eine radiale Geschwindigkeitshypothese eines Ziels Vr=f·λ/2, wobei λ die Wellenlänge der radioelektrischen Impulse ist.

8. Verfahren nach einem der vorherigen Ansprüche, das ferner einen Schritt des Schwellenwertbildens an Ausgangssignalen der Filter beinhaltet, um diejenigen zu bestimmen, die dazu neigen, von einem Ziel reflektierten Echos zu entsprechen.

9. Verfahren nach den Ansprüchen 7 und 8, wobei:

- Schritt c) durch Filtern der Signale ausgeführt wird, die mit mehreren Filterbänken (BF) demoduliert und abgetastet werden, die jeweils einer besonderen Ambiguitätsklasse entsprechen;
- wobei der Schwellenwertbildungsschritt das Berechnen der Leistung der Ausgangssignale der Filter und das Vergleichen derselben mit einer vordefinierten Schwelle beinhaltet; und

- Schritt d), der nach dem Schwellenwertbildungsschritt ausgeführt wird, für jede Filterbank, von der mehrere Ausgangssignale eine Leistung haben, die die vordefinierte Schwelle übersteigt, das Auswählen des Ausgangssignals mit der höchsten Leistung beinhaltet.

10. Verfahren nach einem der vorherigen Ansprüche, wobei das kürzeste Zeitintervall zwischen zwei Impulsen des Burst gleich oder größer ist als $2D_{max}/c$, wobei $D_{max}$ eine maximale instrumentierte Distanz des Radars und c die Ausbreitungsgeschwindigkeit der radioelektrischen Impulse ist, so dass das Radar nach Distanz nicht mehrdeutig ist.

11. Puls-Doppler-Radar zum Ausführen eines Verfahrens nach einem der vorherigen Ansprüche, das Folgendes umfasst:

- eine Schaltung (CG) zum Erzeugen eines Burst von kohärenten radioelektrischen Impulsen;
- eine Empfangsschaltung (CR) zum Demodulieren und Abtasten von Signalen, die Echos der Impulse enthalten können, und zum Auswählen der Samples, die einer Distanzhypothese eines Ziels entsprechen; und
- einen Signalprozessor (PRS) zum Filtern der Signale mit mehreren Filtern, wobei jedes Filter ein Filter ist, das an den Impulsburst mit einer anderen Frequenzverschiebung angepasst ist;
- wobei die Erzeugungsschaltung zum Erzeugen von radioelektrischen Pulsen konfiguriert oder programmiert ist, die durch ein Zeitintervall getrennt sind, das von einem Impuls zum andern variabel ist;

**dadurch gekennzeichnet, dass**:

- wenigstens bestimmte der Filter zur selben Ambiguitätsklasse gehören, wobei eine Ambiguitätsklasse aus Filtern zusammengesetzt ist, deren Frequenzverschiebungen um ganzzahlige Vielfache einer mittleren Wiederholfrequenz der Impulse des Burst voneinander beabstandet sind; und dadurch, dass
- der Signalprozessor zum Bestimmen, unter den Ausgangssignalen von Filtern derselben Ambiguitätskasse, des größten Signals programmiert oder konfiguriert ist.

## Claims

1. A method for detecting at least one target using pulse-Doppler radar, comprising the following steps:

a) generating a burst of coherent radioelectric pulses ($I_1 ...I_N$);
b) receiving, demodulating and sampling signals likely to contain echoes (E) from said pulses originating from said or at least one said target (C); and
c) filtering said signals by means of a plurality of filters ($F_{-n} ...F_0 ...F_n$), each of said filters being a filter that is matched to said burst of pulses with a different frequency shift;

wherein:

- said radioelectric pulses of said burst are separated by a time interval (Tr(k)) that is variable from one pulse to the next;

**characterised in that**:

- at least some of said filters belong to a same ambiguity category, an ambiguity category being made up of filters for which said frequency shifts are spaced apart from each other by multiple integers of a mean repetition frequency of the pulses of said burst; and **in that**
- said method further comprises a step d) of resolving radial speed ambiguity by determining, from among the signals output from the filters of a same ambiguity category, the signal with the highest magnitude.

2. The method according to claim 1, wherein said radioelectric pulses of said burst are separated by a time interval that is monotonously variable from one pulse to the next.

3. The method according to any one of the preceding claims, wherein said burst comprises a succession of sub-bursts, the time intervals separating said radioelectric pulses being constant inside each sub-burst, but variable from one sub-burst to the next.

4. The method according to any one of the preceding claims, wherein said time intervals are linearly variable from one pulse to the next or from one sub-burst to the next.

5. The method according to any one of the preceding claims, wherein said step b) comprises an operation of selecting samples of said signals separated by time intervals coinciding with those that separate the pulses of said burst.

6. The method according to claim 5, wherein said operation of selecting samples of said signals is repeated a number of times according to various distance hypotheses of a target.

7. The method according to claim 6, wherein each of said filters is configured to supply an output signal S(f) provided by:

$$S(f) = \sum_{k=0}^{N-1} s[t(k)] \times w[t(k)] \times exp[-2\pi j \times f \times t(k)]$$ ,

where N is the number of pulses in said burst, s[t(k)] is an input signal of said filter obtained by said operation of selecting samples, such that, for each value of k, the interval t(k)-t(k-1) is equal to the time interval between the (k-1)$^{th}$ and the k$^{th}$ pulse of the burst, with the instant t(0) depending on the considered distance hypothesis, w[t(k)] is a weighting function sampled at the instants t(k) and f is the frequency shift specific to said filter, which corresponds to the Doppler shift for a radial speed hypothesis of a target Vr=f.$\lambda$/2, with $\lambda$ being the wavelength of said radioelectric pulses.

8. The method according to any one of the preceding claims, further comprising a step of thresholding output signals of said filters so as to determine those that are likely to correspond to echoes reflected by a target.

9. The method according to claims 7 and 8, wherein:

- said step c) is implemented by filtering the signals demodulated and sampled by means of a plurality of filter banks (BF), each corresponding to a distinct ambiguity category;
- said thresholding step comprises computing the power of the signals output from said filters and comparing them to a predefined threshold; and
- said step d), which is implemented after said thresholding step, comprises, for each filter bank with a plurality of output signals having a power that exceeds said predefined threshold, selecting the output signal with the highest power.

10. The method according to any one of the preceding claims, wherein the shortest time interval between two pulses of said burst is higher than or equal to 2D$_{max}$/c, where D$_{max}$ is a maximum instrumented distance of said radar and c is the propagation speed of said radioelectric pulses, whereby the radar is non-ambiguous by distance.

11. A pulse-Doppler radar for implementing a method according to any one of the preceding claims, comprising:

- a circuit (CG) for generating a burst of coherent radioelectric pulses;
- a reception circuit (CR) for demodulating and sampling signals that can contain echoes from said pulses and for selecting the samples that correspond to a distance hypothesis of a target; and
- a signal processor (PRS) for filtering said signals by means of a plurality of filters, each of said filters being a filter matched to said burst of pulses with a different frequency shift;
- said generation circuit being configured or programmed to generate radioelectric pulses separated by a time interval that is variable from one pulse to the next;

**characterised in that**:

- at least some of said filters belong to a same ambiguity category, an ambiguity category being made up of filters for which said frequency shifts are spaced apart from each other by integer multiples of a mean repetition frequency of the pulses of said burst; and **in that**
- said signal processor is programmed or configured to determine, from among the signals output from the filters of a same ambiguity category, the signal with the highest magnitude.

FIG.1

FIG.2

FIG.5

FIG.3A

FIG.3B

**FIG.4**

**FIG6**

EP 2 821 809 B1

## RÉFÉRENCES CITÉES DANS LA DESCRIPTION

**Documents brevets cités dans la description**

- EP 0818691 A

- US 6720909 B

**Littérature non-brevet citée dans la description**

- **P. LACOMME ; J.P. HARDANGE ; J.C. MARCHAIS ; E. NORMANT.** Air and Spaceborne Radar Systems, An Introduction. William Andrew Publishing, 2001